# EUROPÄISCHE PATENTSCHRIFT

(11) **EP 1 431 021 B1**
(45) Veröffentlichungstag und Bekanntmachung des Hinweises auf die Patenterteilung: **21.06.2006**
(21) Anmeldenummer: 03025938.6
(22) Anmeldetag: 13.11.2003
(51) Int. Cl.: B29C 49/80

(54) **Verfahren und Vorrichtung zum Herstellen von Hohlkörpern aus Kunststoff**
Method and apparatus for manufacturing of hollow bodies made of plastic
Appareil et procédé de fabrication des corps creux en plastique

(30) Priorität: 19.12.2002 DE 10259589
(43) Veröffentlichungstag der Anmeldung: 23.06.2004
(73) Patentinhaber: KRONES AG, 93068 Neutraubling (DE)
(72) Erfinder: Dünzinger, Bernhard, Unterdeggenbach 84069 Schierling (DE); Voth, Klaus, 98083 Obertraubling (DE)

(56) Entgegenhaltungen:
- WO-A-01/89790
- DE-A- 19 737 527
- DE-U- 20 114 032
- US-A- 4 693 375

## Beschreibung

Die Erfindung betrifft ein verfahren zum Herstellen von Hohlkörpern aus Kunststoff durch Streckblasen von erwärmten Vorformlingen gemäß dem Oberbegriff des Anspruchs 1 sowie eine hierfür geeignete Vorrichtung gemäß dem Oberbegriff des Anspruchs 5.

Es ist bereits eine gattungsgemäße Vorrichtung bekannt, bei der sowohl die Kontrollstation als auch die damit verbundene Ausscheidestation mit beträchtlichem Abstand vor der Heizstation angeordnet sind, so dass alle fehlerhaften Vorformlinge noch vor dem Erwärmen ausgeschieden werden können (DE 197 37 527 A1). Die Kontrollstation weist einen eigenen Antriebsmotor auf, der durch eine spezielle Aufholsteuerung dafür sorgt, dass die durch das Ausscheiden aller fehlerhaften Vorformlinge entstandenen Lücken noch vor der Heizstation wieder geschlossen werden. Die Heizstation und die Blasstation werden somit lückenlos mit Vorformlingen bestückt und arbeiten mit maximaler Leistung und maximalem Wirkungsgrad. Der konstruktive Aufwand sowie der Platzbedarf der bekannten Vorrichtung ist jedoch nicht unerheblich und ihre Integration ist manchmal schwierig, weshalb diese Bauweise mit separatem Preforminspektor trotz ihrer Vorzüge nicht für alle Anwendungsfälle geeignet ist.

Andererseits ist es bereits bekannt, eine mechanische Kontrollstation mit Ausscheidefunktion in das Einlaufsternrad der Heizstation zu integrieren (US-PS 4 693 375). Auch hier werden alle beanstandeten Vorformlinge noch vor der Heizstation ausgeschieden; die dadurch erzeugten Lücken pflanzen sich jedoch voll durch die Heizstation und die Blasstation fort. Dies führt je nach Anteil an fehlerhaften Vorformlingen zu mehr oder weniger starker Beeinträchtigung der Leistung bzw. des Wirkungsgrads. Hinzu kommt, dass durch die Lücken zwischen den Vorformlingen in der Heizstation die Erwärmung der den Lücken vorausgehenden und nachfolgenden Vorformlinge gestört wird, was zu Fehlern in den fertig geblasenen Hohlkörpern, z.B. Getränkeflaschen, führt.

Schließlich ist durch die WO-A-01/89790 bereits eine Vorrichtung zum Herstellen von Hohlkörpern aus Kunststoff bekannt, bei der die vorformlinge vereinzelt und dann in spezielle Träger eingesetzt werden, die mittels eines Förderbands der Heizstation zugeführt werden. Alle Träger ohne Vorformling oder mit schief sitzendem Vorformling werden noch vor der Heizstation ausgestoßen, wonach die entstandene Lücke durch Aufstauen der Träger auf dem Förderer geschlossen wird. Hierfür ist ausreichend Raum sowie ein spezieller Förderer erforderlich.

Der Erfindung liegt die Aufgabe zu Grunde, ein gattungsgemäßes Verfahren und eine gattungsgemäße Vorrichtung zum Herstellen von Hohlkörpern aus Kunststoff zu schaffen, das bzw. die ein ungleichmäßiges Erwärmen von Vorformlingen möglichst vermeidet, ohne dass ein Aufstauen der Vorformlinge vor dem Erwärmen zum Schließen von Lücken erforderlich ist.

Diese Aufgabe wird hinsichtlich des Verfahrens durch die Merkmale des Anspruchs 1 und hinsichtlich der Vorrichtung durch die Merkmale des Anspruchs 5 gelöst.

Erfindungsgemäß werden auch fehlerhafte Vorformlinge zumindest teilweise bewusst erwärmt und erst kurz vor dem Blasvorgang ausgeschieden. Die Erwärmung der benachbarten fehlerfreien Vorformlinge wird daher nicht gestört. Der Wirkungsgrad des Verfahrens und der Maschine wird so nur gering beeinträchtigt. Kontrolle und Ausscheidung können optimal in das Blasverfahren bzw. in die Blasmaschine integriert werden; ein eigener, kostenaufwändiger Preforminspektor ist nicht erforderlich. Trotzdem können alle für die Produktion ungeeigneten Vorformlinge zuverlässig aussortiert werden.

Besonders vorteilhaft ist es, wenn gemäß einer Weiterbildung der Erfindung nur diejenigen fehlerhaften Vorformlinge nach dem Erwärmen ausgeschieden werden, die anstandslos auf die üblicherweise in Heizstationen vorgesehenen Haltedorne für den Vorformling-Transport aufgesteckt werden können. Dies ist beispielsweise der Fall bei Vorformlingen mit fehlerhaftem Tragring, fehlerhafter Dichtfläche oder nur leicht ovaler Mündung, Grob fehlerhafte Vorformlinge dagegen, z.B. mit stark ovaler oder geschlossener Mündung, die nicht auf die Haltedorne aufgesteckt werden können, werden dann bereits vor dem Erwärmen ausgeschieden. Auf diese Weise werden die verbleibenden Lücken beim Erwärmen auf ein unbedingt notwendiges Mindestmaß reduziert. Die Unterscheidung zwischen den beiden fehlerhaften Klassen von Vorformlingen ist insbesondere mit optoelektronischer Abtastung und digitaler Signalverarbeitung kein Problem. Auf diese Weise wird ein fehlerhafter Vorformling je nach Art seines Fehlers an der jeweils zweckmäßigsten Stelle entfernt.

Vorteilhafte Weiterbildungen der Erfindung sind in den Unteransprüchen enthalten.

Im Nachstehenden wird ein Ausführungsbeispiel der Erfindung anhand der Zeichnungen beschrieben. Es zeigen:
- Fig. 1: die schematische Draufsicht auf eine Streckblasmaschine
- Fig. 2: in vergrößerter Darstellung den Ausschnitt Z nach Fig. 1
- Fig. 3: die Seitenansicht der Kontrollstation der Streckblasmaschine nach Fig. 1, teilweise im Schnitt
- Fig. 4: die Draufsicht auf einen fehlerfreien Vorformling
- Fig. 5: die Draufsicht auf einen leicht fehlerhaften Vorformling
- Fig. 6: die Draufsicht auf einen stark fehlerhaften Vorformling.

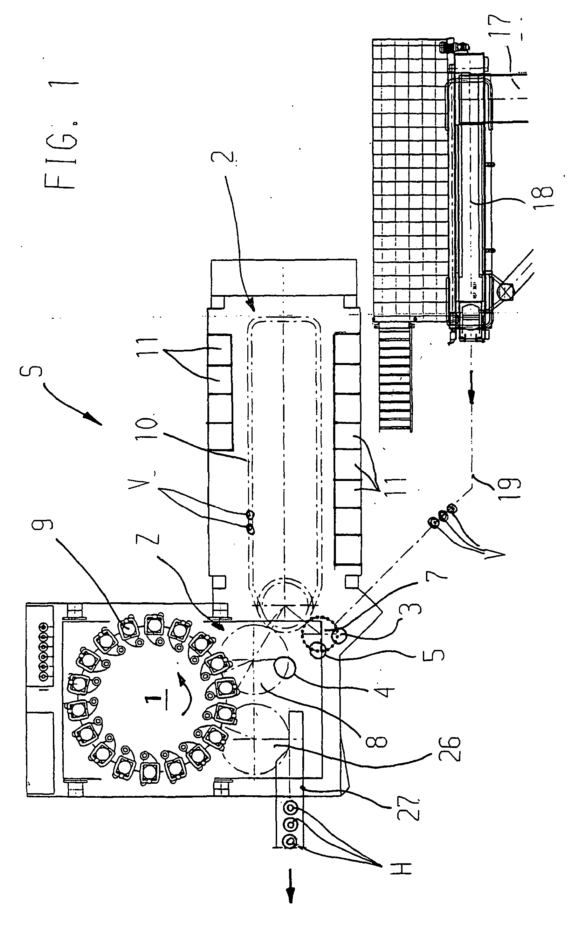

Die Streckblasmaschine S nach Fig. 1 bis 3 besitzt eine Blasstation 1 in Form eines mit mehreren Blasformen 9 bestückten, in Pfeilrichtung kontinuierlich antreibbaren Blasrads und eine vorgeschaltete Heizstation 2 mit einer in Pfeilrichtung kontinuierlich umlaufenden Transportkette 10 für die Vorformlinge V und stationären Infrarot-Heizkästen 11.

Zwischen den ins Innere der Vorformlinge V elastisch eingreifenden Haltedornen 12 der Transportkette 10 und den Blasformen 9 werden die erwärmten Vorformlinge V durch ein in Pfeilrichtung kontinuierlich rotierendes Transfersternrad 8 überführt, das mit mehreren radial und tangential steuerbaren Greifarmen 13 besetzt ist. An den radial äusseren Enden der Greifarme 13 sind elastische Greifzangen 14 angeordnet, die unterhalb des Tragrings T der Vorformlinge V angreifen.

Die Zufuhr der Vorformlinge V zu den Haltedornen 12 der Transportkette 10 erfolgt durch ein in Pfeilrichtung kontinuierlich antreibbares Einlaufsternrad 7 mit sägezahnartig geformten Taschen 15. Dabei werden die Vorformlinge V durch einen stationären Führungsbogen 16 in den Taschen gehalten, bis sie von den abgesenkten Haltedornen 12 aufgenommen worden sind.

Die Streckblasmaschine S umfasst weiter ein Magazin 17 für die Vorformlinge V mit einem Walzensortierer 18, der die Vorformlinge einzeln nacheinander und in aufrechter Normalposition in eine nach unten hin geneigte Rutsche 19 einführt. Diese besteht im wesentlichen aus zwei unterhalb des Tragrings T der Vorformlinge V angreifenden Führungsschienen und endet am Umfang des Einlaufsternrads 7, welches den jeweils vordersten Vorformling V mit seinen Taschen 15 aufnimmt und weitertransportiert.

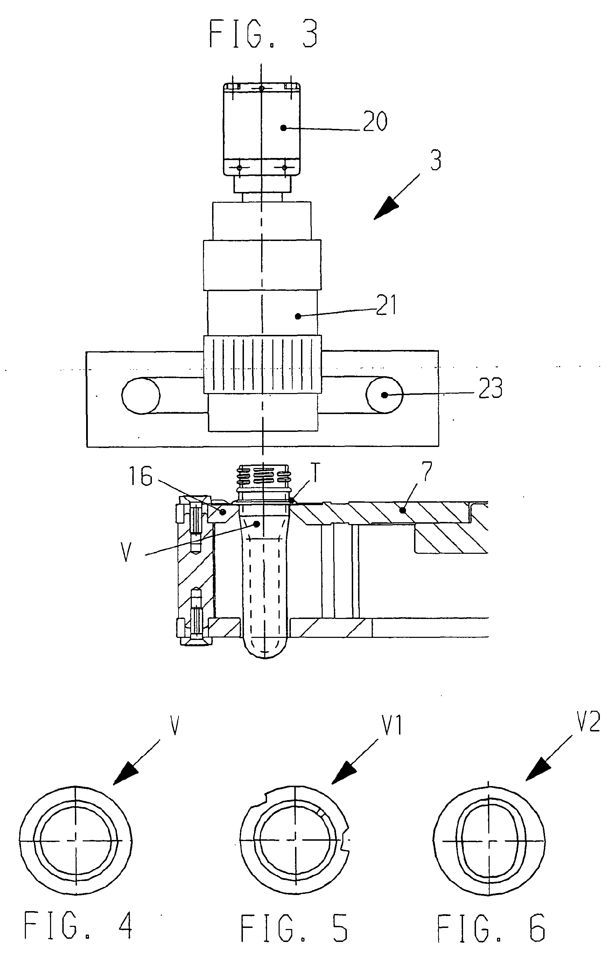

In dem sich an die Rutsche 19 anschließenden Umlaufbereich des Einlaufsternrads 7 ist eine optoelektronische Kontrollstation 3 für die Vorformlinge V angeordnet. Diese besitzt eine stationär über der Bewegungsbahn der Vorformlinge angeordnete CCD-Kamera 20 mit einer Optik 21 und einer Beleuchtungseinrichtung 13. Die Kamera 20 erzeugt von jedem vorbeilaufenden Vorformling V ein Bild der Mündung und des Tragrings, das in einer angeschlossenen elektronischen Auswertungseinrichtung 6 in Echtzeit analysiert und klassifiziert wird. Die von einem Mikroprozessor gestützte Auswertungseinrichtung 6 ist derart programmiert, dass beim Inspizieren eines leicht fehlerhaften Vorformlings V1 gemäß Fig. 5 mit Fehlern an der Dichtfläche und/oder am Tragring und/oder einer leicht ovalen Mündung ein erstes Fehlersignal F1 erzeugt wird. Ein zweites Fehlersignal F2 wird erzeugt, wenn ein Vorformling V2 gemäß Fig. 6 mit stark ovaler oder gar geschlossener oder nur teilweise offener Mündung inspiziert wird, unabhängig davon ob die Dichtfläche und der Tragring beschädigt sind oder nicht. Wird ein ordnungsgemäßer Vorformling V gemäß Fig. 4 mit kreisrunder und fehlerfreier Mündung und unbeschädigtem Tragring inspiziert, so wird kein Fehlersignal erzeugt.

Die vorbeschriebene elektronische Auswertungseinrichtung 6 steuert zwei Sortierstationen 4 und 5 an. Die erste Sortierstation 5 ist dem Transfersternrad 8 zugeordnet und im Umlaufbereich der Vorformlinge V zwischen Heizstation 2 und Blasstation 1 vorgesehen. Die zusätzliche, zweite Sortierstation 5 ist dem Einlaufsternrad 7 zugeordnet und im Umlaufbereich der Vorformlinge V zwischen Kontrollstation 3 und Heizstation 2 vorgesehen.

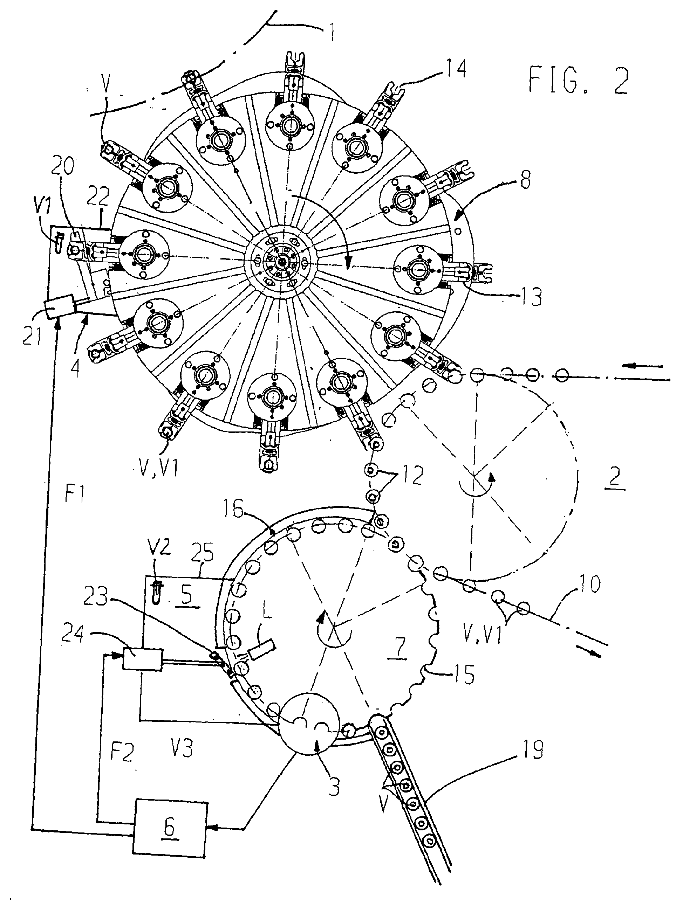

Die erste Sortierstation 4 weist eine hebelartig schwenkbare Weichenzunge 20 auf, an der ein mit hoher Geschwindigkeit zwischen zwei Positionen verfahrbares, z.B. elektropneumatisches Stellorgan 21 angreift. Durch dieses wird die Weichenzunge 20 zwischen der in Fig. 2 gezeigten Auswurfstellung und einer näher an der Drehachse des Transfersternrads 8 liegenden Neutralstellung hin- und herbewegt. In der Neutralstellung können die Vorformlinge V die Sortierstation 4 bzw. Weichenzunge 20 unbehelligt passieren. Nimmt dagegen die Weichenzunge 20 die Auswurfstellung ein, so wirkt sie auf einen passierenden Vorformling V1 dicht unterhalb des Tragrings T ein und drückt diesen aus der elastischen Greiferzange 14 heraus. Der ausgeschiedene Vorformling V1 fällt in einen ersten Sammelbehälter 22.

Die zweite Sortierstation 5 weist ein in eine Öffnung des stationären Führungsbogens 16 eingesetztes, hebelartig schwenkbares Führungsstück 23 auf, das mit hoher Geschwindigkeit durch ein elektropneumatisches Stellorgan 24 oder dgl. zwischen einer Neutralstellung, in der es die Lücke im Führungsbogen 16 schließt und einer Auswurfstellung, in der es die Lücke im Führungsbogen 16 freigibt, hin- und herbewegbar ist. In der Neutralstellung des Führungsstücks 23 werden die passierenden Vorformlinge V in den Taschen 15 gehalten und laufen unbehelligt weiter zur Heizstation 2. In der Auswurfstellung dagegen können die Vorformlinge V2 unter Einfluss ihres Eigengewichts und der Zentrifugalkraft nach aussen hin durch die geöffnete Lücke im Führungsbogen 16 herausfallen, was erforderlichenfalls durch eine Luftdüse L unterstützt wird. Die ausgeschiedenen Vorformlinge V2 werden in einem zweiten Sammelbehälter 25 aufgenommen.

Die Funktion der vorbeschriebenen Vorrichtung sowie das mit ihr durchgeführte Verfahren laufen folgendermaßen ab:

Die ungeordnet und mit normaler Raumtemperatur ins Magazin 17 eingeschütteten Vorformlinge V aus gespritztem PET werden nach Ausrichtung und Vereinzelung durch den Walzensortierer 18 über die Rutsche 19 mittels Hangabtrieb dem Einlaufsternrad 7 zugeführt. Dort werden sie durch,die sägezahnartigen Taschen 15 einzeln nacheinander aufgenommen und am stationären Führungsbogen 16 entlangbewegt. Beim Passieren der Kontrollstation 3 wird der Kopfbereich jedes Vorformlings V elektrooptisch inspiziert. Sind Mündungsdichtfläche und Tragring unbeschädigt und ist die Mündung vollständig offen und nicht verformt, so erfolgt keine Reaktion der Auswertungseinrichtung 6 und der fehlerfreie Vorformling V läuft unbehelligt weiter zur Übergabestelle an die Heizstation 2. Dort werden die Vorformlinge durch Einführen der Haltedorne 12 der Transportkette 10 aufgenommen und passieren dann die Heizkästen 11 der Heizstation 2. Dabei werden sie auf die gewünschte Verarbeitungstemperatur von ca. 100° erwärmt. Nach dem Durchlaufen einer heizkastenfreien Konditionierstrecke nähern sich die Vorformlinge dem Transfersternrad 8 und werden der Reihe nach durch dessen gesteuerte Greifarme mit den elastischen Greifzangen 14 erfasst und gehalten, worauf die Haltedorne 12 nach oben hin aus den Vorformlingen V abgezogen werden. Nun laufen die fehlerfreien Vorformlinge V weiter zur Blasstation 1 und werden in deren geöffnete Blasformen 9 eingesetzt. Daraufhin werden die Blasformen 9 geschlossen und es erfolgt in herkömmlicher Weise durch mechanisches Vorrecken sowohl mit Niederdruck- und Hochdruck-Blasluft ein Ausformen der Vorformlinge V zu den flaschenförmigen Hohlkörpern H. Diese werden nach Abkühlung aus den geöffneten Blasformen 9 entnommen, beispielsweise durch ein ähnlich wie das Transfersternrad 8 aufgebaute Auslaufsternrad 26 und von diesem an einen Abförderer 27 für die fertigen Hohlkörper H übergeben.

Wird in der Kontrollstation 3 ein leicht fehlerhafter Vorformling V1 gemäß Fig. 5 mit Beschädigungen an der Mündung und/oder am Tragring und/oder leicht ovaler, jedoch offener Mündung inspiziert, so erzeugt die Auswertungseinrichtung 6 ein erstes Fehlersignal F1, das mit entsprechender zeitlicher Verzögerung gemäß dem Transportweg zwischen der Kontrolleinrichtung 3 und der ersten Sortiereinrichtung 4 an diese weitergeleitet wird. Zunächst aber passiert der leicht fehlerhafte Vorformling V1 genauso wie ein fehlerfreier Vorformling V die zweite, in Neutralposition stehende Sortierstation 5 und wird dann in die Heizstation 2 eingeschleust und auf Verarbeitungstemperatur erwärmt. Danach erfolgt in gleicher Weise wie bei einem fehlerfreien Vorformling V die Übergabe an das Transfersternrad 8. Erst bei Erreichen der ersten Sortierstation 4 wird der leicht fehlerhafte, auf normale Verarbeitungstemperatur erwärmte Vorformling V1 in vorbeschriebener Weise durch Betätigung der Weichenzunge 20 ausgeschleust und so von einer weiteren Bearbeitung in der Blasstation 1 ausgeschlossen. Dementsprechend empfängt die Blasform 9, die normalerweise den fehlerhaften Vorformling V1 empfangen würde, in diesem Falle keinen Vorformling. Die vorausgehenden und nachlaufenden Blasformen 9 dagegen werden mit fehlerfreien Vorformlingen V bestückt, die ordnungsgemäß auf ihr Temperaturprofil gebracht wurden, da der an der Sortierstation 4 entfernte fehlerhafte Vorformling V1 im Bereich der Heizstation 2 keine Lücke verursacht hat.

Wird durch die Kontrollstation 3 ein stark fehlerhafter Vorformling V2 gemäß Fig. 6 mit ganz oder teilweise verschlossener Mündung oder stark oval verformter Mündung inspiziert, so erzeugt die Auswertungseinrichtung 6 ein zweites Fehlersignal F2 für die zweite Sortierstation 5 mit entsprechend dem Transportweg zwischen Kontrollstation 3 und Sortierstation 5 bemessener Verzögerung. Derartige stark fehlerhafte Vorformlinge V2 könnten von den in die Vorformlingsmündung einfahrbaren Haltedornen 12 der Transportkette 10 nicht ordnungsgemäß übernommen werden und würden an der Übergangsstelle zwischen Einlaufsternrad 7 und Transportkette 10 evtl. Störungen verursachen. Diese Vorformlinge V2 werden daher kurze Zeit nach dem Passieren der Kontrollstation 3 bereits in der zweiten Sortierstation 5 in der beschriebenen Weise durch Ausschwenken des Führungsstücks 23 ausgeschieden. Dadurch entsteht eine Lücke, die durch die Heizstation 2 hindurchläuft. Diese Lücke kann eine unerwünschte Temperaturänderung am vorauslaufenden und nachlaufenden fehlerfreien Vorformling V verursachen, so dass es zweckmäßig ist, auch diese beiden Vorformlinge V von einer weiteren Verarbeitung in der Blasstation 1 auszuschließen. Hierzu löst die elektronische Auswertungseinrichtung 6 automatisch bei Erzeugen eines Fehlersignals F2 für einen Vorformling V2 jeweils ein Fehlersignal F1 für den vorauslaufenden und den nachlaufenden Vorformling V aus, unabhängig davon ob dieser absolut fehlerfrei oder leicht fehlerhaft ist. Dieser Verfahrensschritt ist jedoch auf den wegen der guten Qualitätskontrolle bei den Vorformlingsherstellern relativ seltenen Fall einer geschlossenen Mündung usw. beschränkt und fällt daher nicht stark ins Gewicht. Die leicht fehlerhaften Vorformlinge V1 treten dagegen häufiger auf, da die entsprechenden Fehlerstellen auch durch den Transport zum Flaschenhersteller o. dgl. hervorgerufen werden können.

Das Aussortieren stark fehlerhafter Vorformlinge kann auch in den Einlaufbereich der Heizstation verlegt werden, wobei die Haltedorne als Messdorne oder Auswerfer wirken können, indem sie Vorformlinge mit verengter oder ovaler Mündung automatisch ausstoßen. Die zusätzliche Sortierstation 5 kann dann entfallen. Auch können stark fehlerhafte Vorformlinge in der gleichen Weise wie leicht fehlerhafte Vorformlinge in der Heizstation erwärmt und erst in der ersten Sortierstation am Transfersternrad ausgeschieden werden, wenn die Bauweise der Heizstation dies erlaubt. Dies ist z.B. der Fall, wenn die Transportkette 10 mit an der Aussenseite der Vorformlinge angreifenden Greifzangen versehen ist. In jedem Falle wird durch das erfindungsgemäße Verfahren und die erfindungsgemäße Vorrichtung die Produktion ordnungsgemäßer Hohlkörper nur soweit unbedingt erforderlich reduziert.

## Patentansprüche

1. Verfahren zum Herstellen von Hohlkörpern (H) aus Kunststoff durch Streckblasen von erwärmten Vorformlingen (V), wobei die Vorformlinge vor dem Erwärmen kontrolliert und fehlerhafte Vorformlinge ausgeschieden werden, **dadurch gekennzeichnet, dass** zumindest ein Teil der fehlerhaften Vorformlinge (V) erwärmt und erst nach dem Erwärmen ausgeschieden wird.

2. Verfahren nach Anspruch 1, **dadurch Gekennzeichnet**, das die fehlerhaften Vorformlinge (V),die auf Haltedorne aufgesteckt werden können, erst nach dem Erwärmen ausgeschieden werden, und diejenigen fehlerhaften Vorformlinge (V), die nicht auf Haltedorne aufgesteckt werden können, bereits vor dem Erwärmen ausgeschieden werden.

3. Verfahren nach Anspruch 2, **dadurch gekennzeichnet, dass** die fehlerhaften Vorformlinge (V) mit Fehlern an der Pichtfläche oder am Tragring nach dem Erwärmen und die fehlerhaften Vorformlinge (V) mit ovaler oder verengter Mündung vor dem Erwärmen ausgeschieden werden.

4. Verfahren nach Anspruch 2 oder 3, **dadurch gekennzeichnet, dass** diejenigen fehlenfreien Vorformlinge (V), die einer beim Ausscheiden eines fehlerhaften Vorformlings (V) vor dem Erwärmen erzeugten Lücke benachbart sind, nach dem Erwärmen ausgeschieden werden.

5. Vorrichtung zum Herstellen von Hohlkörpern (H) aus Kunststoff durch Streckblasen von erwärmten Vorformlingen (V), mit einer Heizstation (2), einer nachgeschalteten Blasstation (1) und einer vorgeschalteten Kontrollstation (3), **dadurch gekennzeichnet, dass** zwischen der Heizstation (2) und der Blasstation (1) eine von der Kontrollstation (3) steuerbare Sortierstation (4) zum Ausscheiden von fehlerhaften Vorformlingen (V) angeordnet ist.

6. Vorrichtung nach Anspruch 5, **dadurch gekennzeichnet, dass** zwischen der Kontrollstation (3) und der Heizstation (2) eine zusätzliche, gleichfalls von der Kontrollstation (3) steuerbare Sortierstation (5) zum Ausscheiden von fehlerhaften Vorformlingen (V) angeordnet ist.

7. Vorrichtung nach Anspruch 6, **dadurch gekennzeichnet, dass** die Kontrollstation (3) eine Auswertungseinrichtung (6) aufweist, die zwischen fehlerhaften Vorformlingen (V) mit fehlerfreier oder nur leicht ovaler Mündung einerseits und fehlerhaften Vorformlingen (V') mit stark'ovaler oder verengter Mündung andererseits unterscheidet und veranlasst, dass letztere bereits in der zusätzlichen Sortierstation (5) vor der Heizstation (2) ausgeschieden werden.

8. Vorrichtung nach einem der Ansprüche 5 bis 7, **dadurch gekennzeichnet, dass** die Kontrollstation (3) an einem der Heizstation (2) vorgeschalteten Einlaufsternrad (7) und die Sortierstation (4) an einem zwischen Heizstation (2) und Blasstation (1) angeordneten Transfersternrad (8) angeordnet sind.

9. Vorrichtung nach Anspruch 8, **dadurch gekennzeichnet, dass** die zusätzliche Sortierstation (5) am Einlaufsternrad (7) angeordnet ist.

## Claims

1. Method of producing hollow articles (H) of plastic by stretch-blow moulding heated parisons (V), the parisons being inspected before being heated and defective parisons being rejected, **characterised in that** at least some of the defective parisons (V) are heated and are rejected only after being heated.

2. Method according to claim 1, **characterised in that** the defective parisons (V) which can be placed on holding mandrels are rejected only after being heated and those defective parisons (V) which cannot be placed on holding mandrels are rejected before being heated.

3. Method according to claim 2, **characterised in that** the defective parisons (V) with defects on the sealing surface or on the supporting ring are rejected after being heated and the defective parisons (V) with an oval or narrowed mouth are rejected before being heated.

4. Method according to claim 2 or claim 3, **characterised in that** those defect-free parisons (V) adjacent to a gap produced when a defective parison (V) is rejected before being heated are rejected after being heated.

5. Device for the production of hollow articles (H) of plastic by stretch-blow moulding heated parisons (V), comprising a heating station (2), a downstream blowing station (1) and an upstream inspection station (3), **characterised in that** a sorting station (4) which can be controlled by the inspection station (3) is arranged between the heating station (2) and the blowing station (1) for the rejection of defective parisons (V).

6. Device according to claim 5, **characterised in that** an additional sorting station (5) which can also be controlled by the inspection station (3) is arranged between the inspection station (3) and the heating station (2) for the rejection of defective parisons (V).

7. Device according to claim 6, **characterised in that** the inspection station (3) has an evaluation unit (6) which distinguishes between, on the one hand, defective parisons (V) with a defect-free or only slightly oval mouth and, on the other hand, defective parisons (V') with a markedly oval or narrowed opening and causes the latter to be rejected in the additional sorting station (5) upstream of the heating station (2).

8. Device according to one of claims 5 to 7, **characterised in that** the inspection station (3) is arranged on an intake star wheel (7) upstream of the heating station (2) and the sorting station (4) is arranged on a transfer star wheel (8) arranged between the heating station (2) and the blowing station (1).

9. Device according to claim 8, **characterised in that** the additional sorting station (5) is arranged on the intake star wheel (7).

## Revendications

1. Procédé de fabrication de corps creux (H) en matière plastique par soufflage-étirage d'ébauches (V) réchauffées, en contrôlant les ébauches avant le réchauffement et en éliminant les ébauches défectueuses,
**caractérisé en ce qu'**
on réchauffe au moins une partie des ébauches (V) défectueuses qui ne sont éliminées qu'après le réchauffement.

2. Procédé selon la revendication 1,
**caractérisé en ce que**
les ébauches (V) défectueuses qui peuvent être fixées sur des mandrins de serrage ne sont éliminées qu'après le réchauffement, et on n'élimine que les ébauches (V) défectueuses qui ne peuvent pas être fixées sur des mandrins de serrage avant le réchauffement.

3. Procédé selon la revendication 2,
**caractérisé en ce que**
les ébauches (V) défectueuses qui présentent des défauts sur la surface d'étanchéité ou sur l'anneau porteur sont éliminées après le réchauffement,
et on n'élimine que les ébauches (V) défectueuses qui présentent une embouchure ovale ou rétrécie avant le réchauffement.

4. Procédé selon la revendication 2 ou 3,
**caractérisé en ce que**
les ébauches (V) sans défaut voisines d'une lacune produite avant le réchauffement par l'élimination d'une ébauche (V) défectueuse, sont éliminées après le réchauffement.

5. Appareil pour la fabrication de corps creux (H) en matière plastique par soufflage-étirage d'ébauches (V) réchauffées,
comportant un poste de chauffage (2), un poste de soufflage (1) monté en aval et un poste de contrôle (3) monté en amont,
**caractérisé en ce qu'**
entre le poste de chauffage (2) et le poste de soufflage (1) un poste de triage (4) pouvant être commandé par le poste de contrôle (3) sert à éliminer les ébauches (V) défectueuses.

6. Appareil selon la revendication 5,
**caractérisé en ce qu'**
entre le poste de contrôle (3) et le poste de chauffage (2) un poste de triage additionnel (5) pouvant lui aussi être commandé par le poste de contrôle (3) sert à éliminer les ébauches (V) défectueuses.

7. Appareil selon la revendication 6,
**caractérisé en ce que**
le poste de contrôle (3) comporte un dispositif d'évaluation (6) qui distingue entre les ébauches (V) défectueuses présentant une embouchure sans défaut ou seulement légèrement ovale, d'un côté, et d'un autre côté les ébauches (V) défectueuses présentant une embouchure fortement ovale ou rétrécie, et qui fait en sorte que ces dernières soient déjà éliminées dans le poste de triage additionnel (5) en amont du poste de chauffage (2).

8. Appareil selon l'une des revendications 5 à 7,
**caractérisé en ce que**
le poste de contrôle (3) est disposé au niveau d'une roue en étoile d'entrée (7) montée en amont du poste de chauffage (2), et le poste de triage (4) est disposé au niveau d'une roue en étoile de transfert (8) montée entre le poste de chauffage (2) et le poste de soufflage (1).

9. Appareil selon la revendication 8,
**caractérisé en ce que**
le poste de triage additionnel (5) est disposé au niveau de la roue en étoile d'entrée (7).
